# EUROPEAN PATENT APPLICATION

(11) **EP 0 596 694 A1**
(43) Date of publication of application: **11.05.1994**
(21) Application number: 93308738.9
(22) Date of filing: 02.11.1993
(51) Int. Cl.: H04L 12/44, H04L 25/49

(54) **Ethernet repeater**

(30) Priority: 02.11.1992 GB 9222914
(71) Applicant: 3COM IRELAND, George Town Grand Cayman (KY)
(72) Inventor: Adams, Martin Charles, Much Hadham, Hertfordshire, SG10 6AU (GB)
(74) Representative: Crawford, Andrew Birkby

(57) **Abstract**

An adaptation circuit for operation in conjunction with a repeater element for a data network is disclosed. The repeater element is of a type capable of communicating with one or more other repeater elements via an 'inter-repeater bus' such that they together operate as a single logical repeater. The adaptation circuit is arranged to receive a plurality of two-level signals from said repeater element, to provide electrical connection to the inter-repeater bus, and to convert said two-level signals into a number, smaller than said plurality, of multi-level signals. This results in the electrical bus between the elements, which is also a feature of the invention, requiring a reduced number of conductors. The adaptation circuits may be connected with repeater elements to form a logical repeater, which preferably operates as an ethernet repeater.

## Description

### BACKGROUND TO THE INVENTION

This patent relates to repeater devices constructed for use in data networks, and more specifically to those repeater devices used in networks which are based on the ethernet or IEEE 802.3 standards for data networking. Furthermore this patent relates to the construction of a repeater unit, and especially (but not exclusively) to a repeater unit which is formed within a modular chassis. Hereinafter the word ethernet will be taken to mean both ethernet and IEEE 802.3 type data networks.

Ethernet repeaters are well known networking devices whose characteristics are well defined and widely known. The function of a repeater is to accept data from one ethernet device and to 'repeat' it to all other ethernet devices to which the repeater is attached. The function of 'repeating' requires that the repeater acts in a limited fashion on the incoming signal prior to it being retransmitted. This action is intended to ensure that the repeater can detect certain data faults, and will either overcome data faults before retransmission or will prevent said data being retransmitted. Ethernet repeaters may have 2 or more ports, and if they have more than 2 ports they are often referred to as multiport repeaters.

One important and well defined characteristic of an ethernet repeater is that of the maximum delay between incoming data and retransmitted data, and in most practical designs the delay of a repeater is minimized as far as possible.

In practice many ethernet repeaters are constructed in a modular fashion, comprising a multiplicity of electrical circuit boards which fit within a chassis (hereinafter referred to as a 'modular ethernet chassis') having an electrical 'bus' which acts so as to interconnect said electrical circuit boards.

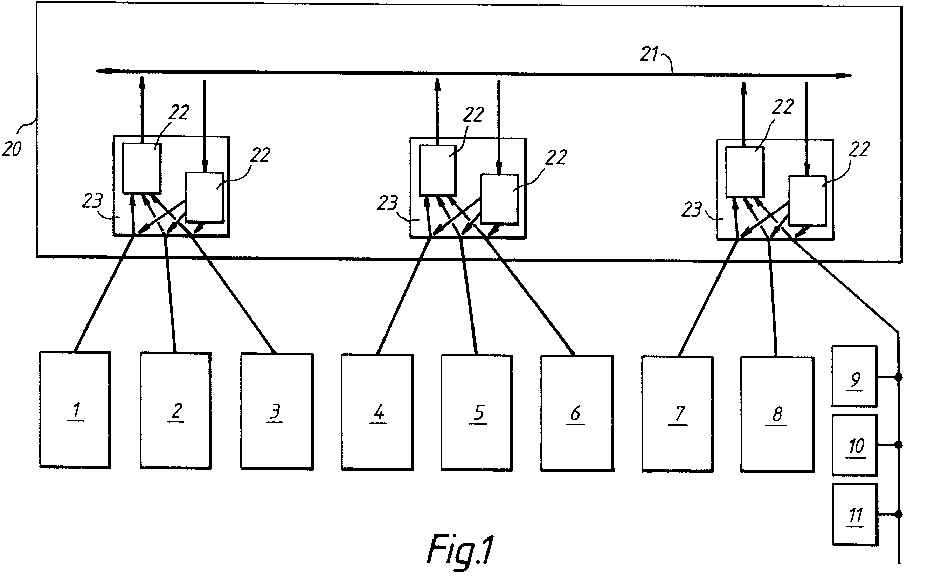

Figure 1 shows diagrammatically a typical multiport repeater 20 as constructed within a modular chassis, and shows a number of remote ethernet devices 1-11 attached to said repeater. The diagram shows the repeater formed from a number of electrical circuit boards 23, each containing repeater circuitry, interconnected via a parallel electrical bus 21. Data from remote ethernet device 1, for example will enter the multiport repeater 20 and, after some data modification, will be repeated out to all other remote ethernet devices.

A single ethernet repeater 20 has a maximum allowable delay and it is necessary to ensure that this maximum delay is not exceeded in the repeaters which are constructed in a modular fashion. It is therefore necessary for each electrical circuit board 23 to be constructed from two electrical circuit blocks 22, each of which to introduces a delay which is about half of the delay of a single repeater 20, such that two electrical circuit blocks working together form a single repeater delay. For this reason ethernet repeaters are often formed from electronic circuit blocks which may be called a 'half repeater', and which can be connected over an electrical bus. Ethernet repeaters of this type are manufactured in very large quantities, and said repeater circuitry is often formed into a single integrated circuit, said circuitry often needing some external components in order to construct a multiport repeater unit.

Although a variety of ethernet repeater integrated circuits exist, many are designed to be interconnected such that they provide a single ethernet repeater delay when interconnected over an electrical bus. For repeaters such circuitry will hereinafter be referred to as a 'busable ethernet IC', of which the 'RIC (Repeater Interface Controller)' which is available from National Semiconductor Corporation under the designation DP 83950-A is a typical example.

The electrical bus which is used to interconnect a multiplicity of RICs, such that they function together as a single repeater circuit will hereinafter be referred to as the 'inter-RIC bus'.

In order to interconnect busable ethernet ICs together it is necessary to convey five basic categories of data between them. These categories are
1) A digital signal which assumes a particular polarity whilst valid ethernet data is present and assumes a different voltage level when valid ethernet data is not present, and which may be referred to as a 'data envelope' signal
2) A digital signal which conveys the actual ethernet data between busable Ethernet ICs
3) A digital signal which conveys information about the 'collision' state of the ethernet network
4) A digital signal used to convey information about the arbitration process for the right to transmit ethernet data, and which is used to resolve a situation when two remote devices may be transmitting together
5) a digital signal used to convey information about the timing of the data stream, and which is commonly referred to as the 'clock' signal.

The present state of the art is that the above signals are conveyed in a digital form and as a two level digital signal, each signal having a state which may be either 'high' (logic 1) or 'low' (logic 0). Furthermore each of the five signal categories mentioned above may need several electrical lines to convey the amount of data within each signal category and so, for example, the collision state signal may need four electrical lines in order to function adequately.

In general a state of the art busable ethernet IC requires between 7 and 10 electrical lines in order to convey the required data between two or more of these devices. This in turn dictates that the electrical bus in a modular ethernet chassis is required to have 7-10 electrical lines in order to interconnect two or more busable ethernet ICs. It will thus be seen that as a modular ethernet chassis has a finite number of electrical lines it can only be used to form a limited number of separate ethernet repeaters, and that said number of repeaters could be increased if the number of lines used to interconnect busable ethernet ICs was reduced.

The large number of lines required for interconnecting busable ethernet repeaters is higher than desirable in many cases, and is one problem with current designs of such devices. Another problem is that state of the art devices require a central arbitration circuit, which decides which one of the busable ethernet repeaters has the right to transmit data on the shared bus. This additional circuit involves extra expense and complexity, and takes up area on the printed circuit board required to interconnect busable ethernet ICs.

### BRIEF DESCRIPTION OF THE INVENTION

The present invention provides a means by which the number of signals in the RIC bus can be reduced by using multi-level signals instead of the two-level signals used at present. Although the basic technique described is applicable to all state of the art busable ethernet ICs, a specific implementation is described for use with the 'RIC' integrated circuit from National Semiconductor mentioned above. The present invention also relates to a method by which the shared arbitration circuit can be eliminated, thus reducing the cost and complexity of designs for ethernet repeaters.

### DETAILED DESCRIPTION OF THE INVENTION

Features and advantages of the present invention will become apparent from the following description of an embodiment thereof given by way of example with reference to the accompanying drawings, in which:-
Fig. 1 shows a block diagram of a basic multiport repeater;
Fig. 2 shows a schematic representation of the way in which signals are interconnected using the inter-RIC bus in the repeater shown in Fig. 1;
Fig. 3 shows a block diagram of an embodiment of the present invention;
Fig. 4 shows in more detail a part of the embodiment shown in Fig. 3;
Fig. 5 shows a diagram representing a number of states of the part shown in Fig. 4;
Fig. 6 shows diagrammatically a bus structure for use with the present invention; and
Fig. 7 shows in schematic form how a part of the circuit as shown in Fig. 4 is connected to the bus structure of Fig. 6.

Before describing the present invention, it is considered appropriate to describe in more detail the signals produced by a conventional RIC integrated circuit.

A RIC integrated circuit has an interconnecting bus which is used to interconnect two or more RICs such that they act as one large repeater. This bus, hereinafter known as the 'inter-RIC bus' consists of 8 electrical lines (excluding any ground lines that may be required) as follows:-
ACKO
This line is connected to the ACKI pin on a second RIC, which in turn has its ACKO pin connected to the ACKI pin on a third RIC, and so on. When a RIC wants to transmit data, and providing that its ACKI signal is high, it forces its own ACKO pin low, such that other RICs in the chain know that another RIC higher in the chain is receiving data or from the network or detecting collision activity on the network.
ACKI
As described above this is used to accept the input from the ACKO signal of another RIC. The ACKO and ACKI signals are used together to arbitrate for the right to transmit ethernet data onto the inter-RIC bus, and a state of the art system has a central arbitration circuit to which all the ACKO and ACKI lines from every RIC are attached, or works on a daisy chained basis.
ACTN
Within the RIC two specific ethernet ports are defined, these being port N, which is the port from which the repeater is receiving data should several ports be receiving data simultaneously, and port M which is the last port experiencing a collision on the output should several ports be in collision simultaneously.
The ACTN signal is used to indicate to all other RICs the the RIC asserting ACTN contains port N and port M, and is made active by any RIC that contains port N or M.
The RIC has separate pins for sensing and driving the ACTN signal, these being ACTNS (ACTN Sense) and ACTND (ACTN Drive), which are inputs and outputs respectively. In normal systems both ACTNS and ACTND connections from the RIC are connected to a single ACTN line on the inter-RIC bus
ANYXN
This signal is used to indicate that a repeater port that does not contain port N or port M is experiencing a collision. The RIC has separate pins for sensing and driving ANYXN, these being ANYXNS (ANYXN Sense) and ANYXND (ANYXN Drive), which are inputs and outputs respectively. In most normal systems both ANYXNS and ANYXND connections from the RIC are connected to a single ANYXN line on the inter-RIC bus
COLN
This signal becomes active when the RIC containing port N or port M is experiencing a collision. The RIC has a single bi-directional pin for sensing and driving COLN. In most normal systems COLN from the RIC is connected to a single COLN line on the inter-RIC bus via an external bi-directional buffer.
IRE
This signal becomes active whilst data is being transmitted from the IRD and IRC lines of a given RIC. The RIC has a single bi-directional pin for sensing and driving IRE. In normal systems IRE from the RIC is connected to a single IRE line on the inter-RIC bus via external bi-directional buffers.
IRD
This signal is used to transmit ethernet data between RICs. The RIC has a single bi-directional pin for sensing and driving IRD. In normal systems IRD from the RIC is connected to a single IRD line on the inter-RIC bus via external bi-directional buffers.
IRC
This signal is used to transmit the clock signal associated with a data signal being transmitted on IRC. The RIC has a single bi-directional pin for sensing and driving IRC. In normal systems IRC from the RIC is connected to a single IRC line on the inter-RIC bus via external bi-directional buffers.

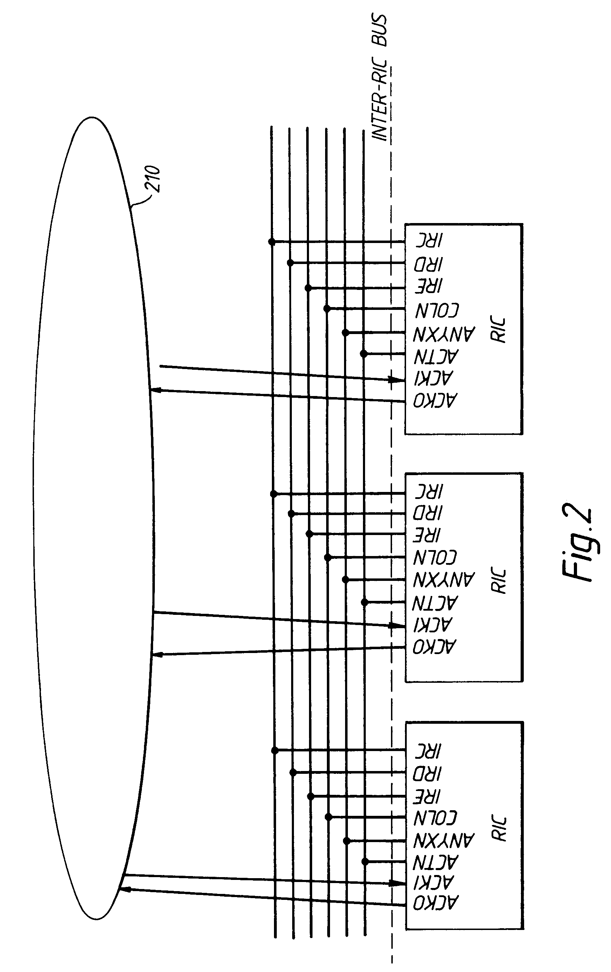

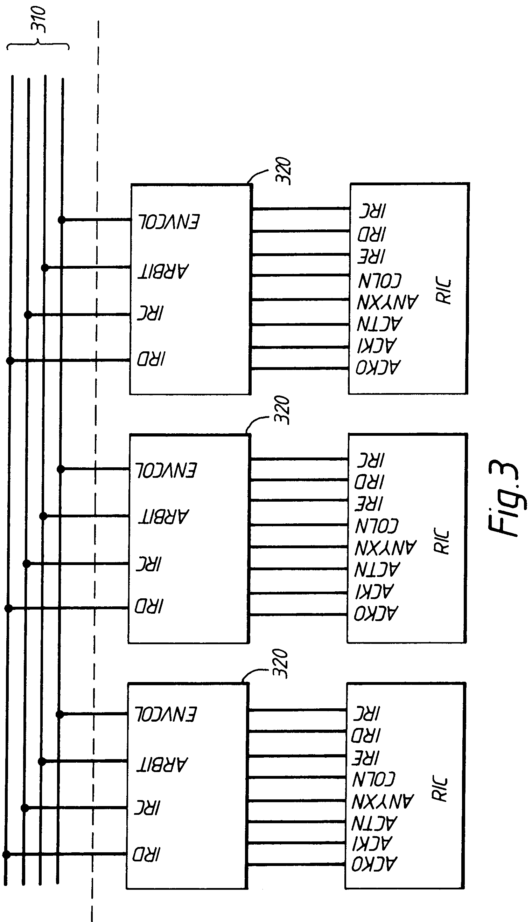

In a state of the art repeater constructed from RIC devices the above signals are interconnected as shown schematically in figure 2 which also includes arbitration circuit 210.

This invention relates to a modification to the inter-RIC bus, and the modified bus as described will hereinafter be referred to as a 'modified inter-RIC bus'. The inventive method for reducing the number of signals in the modified inter-RIC bus requires the use of inter- RIC signals which can have an increased number of, e.g. three, possible levels instead of the two-level signals used at present. The use of three level signals is described specifically hereinafter, by way of being one possible means of using more than two signal levels. The three possible levels which can be used are hereinafter referred to as level 1, level 2 and level 3.

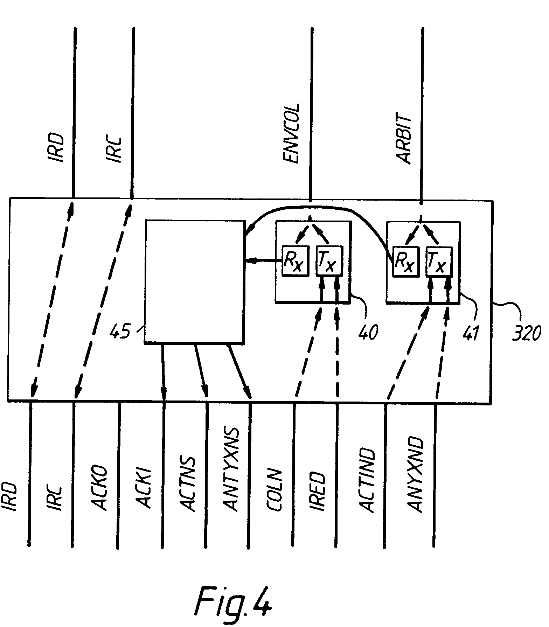

A modified inter-RIC bus as defined by the invention is shown schematically in figure 3 as 310 and consists of four signal lines plus one or more ground lines (ground lines not shown). In this example an adaptation units are shown in figure 3 which act so as to convert the standard RIC bus into the modified RIC bus, although this modification could easily be incorporated into the RIC itself.

The signals lines are referred to as:-
IRD
This is exactly identical to the IRD signal on the unmodified RIC.
IRC
This is exactly identical to the IRC signal on the unmodified RIC.
ARBIT
This is a signal line that is used for two main functions 1) to arbitrate as to which RIC gains status of bus 'master' and thus is allowed to use the bus to transmit data, that is which will contain port N or M and 2) to indicate to all other RICs if any other RIC is experiencing a collision.
ENVCOL
This line is used for two main functions 1) to provide a signal which envelopes the IRE signal and thus indicates valid data, and 2) to indicate to all other RICs that the RIC containing Port N or M is detecting a receive collision on Port N or M.

The precise manner in which the 8 lines of the standard RIC bus are interconnected to the modified RIC bus may be best explained by reference to figure 4, which shows the internal detail of the adaptation unit 320 in a schematic fashion.

As shown in figure 4 the adaptation unit consists of two transceiver entities (40 and 41), each of which is formed from a Transmitter Tx and a Receiver Rx.

One of the transmitters accepts the COLN and IRE signals of a single RIC and then transmits an appropriate level signal on the 'ENVCOL' line onto the modified RIC bus. The ENVCOL signal generated on the modified RIC bus is such that it will be at level 1 if neither IRE nor COLN are active, will be at level 3 if the COLN signal is active or several COLN and/or IRE signals are made active simultaneously, and will be at level 2 if just one IRE is active. The receiver which is attached to the ENVCOL line monitors the level of the ENVCOL line and dependant on the 'level' it will transmit signals to the logic circuit 45, said signal indicating whether one or more COLN signals are active thus drawing the ENVCOL signal to level 3, whether no signal is present (ie the ENVCOL signal is at level 1) or if just one IRE signal is driving the ENVCOL line and the resulting signal is at level 2.

The transmitter of the second transceiver 41 accepts the ACTND and ANYXND signals of a single RIC and then transmits an appropriate level signal on the 'ARBIT' line onto the modified RIC bus. In this case the ARBIT signal is at level 1 if neither ACTND nor ANYXND are made active, is at level 3 if either more than one ACTND or more than one ANYXND signals are active, or if one ACTND and one or more ANYXND are made active, and is at level 2 if only one ACTND is made active.

The receiver which is attached to the ARBIT signal line monitors the 'level' on the ARBIT line and it transmits signals to the logic circuit 45 which are dependent on the signal level on the ARBIT line, said signals informing the logic circuit if the ARBIT line is at level 1, 2 or 3. If the ARBIT line is at level 3 it is assumed that more than one ACTND or ANYXND is being driven or one ACTND and one or more ANYXND are being driven, if the level is 2 it is assumed that only one ACTND is being driven, and if it is at level 1 it is assumed that no RIC is making active its ACTND and ANYXND signals active.

The logic circuit 45 is responsible for accepting signals from the two receivers and for decoding these two signals. Having decoded these signals it can then logically generate the following signals to be input to the connected RIC:- ACTNS, ACKI, ANYXNS, COLN and IRE.

The relationship between these signal lines and the status of the input lines to the logic circuit is a shown below, where ACTND and ANYXND refer to the status of the RIC to which the logic circuit is connected :-
ACKI is made active if ARBIT is at level 1 or (ARBIT is at level 2 and (ACTND or ANYXND are made active)) or (the previous state of ACKI was active and ARBIT is active in current state)
ACTNS is made active if ARBIT is at level 2
ANYXNS is made active if ARBIT is at level 3
COLNS is made active if ENVCOL is at level 3
IRES is made active if (ARBIT is at level 2) and (ENVCOL is at level 2)

The principle of operation of the modified RIC bus and of the logic circuit will now be described by reference to figure 4 and with reference to various data reception and collision scenarios and the corresponding RIC states which are 1) normal data reception state 2) receive collision state, 3) simultaneous receive state 4) transmit collision state and 5) idle state. In the following description it is assumed that more than one RICs are present in the repeater system each of which is connected to a separate adaptation unit, and that the adaptation units are interconnected via the modified RIC bus.

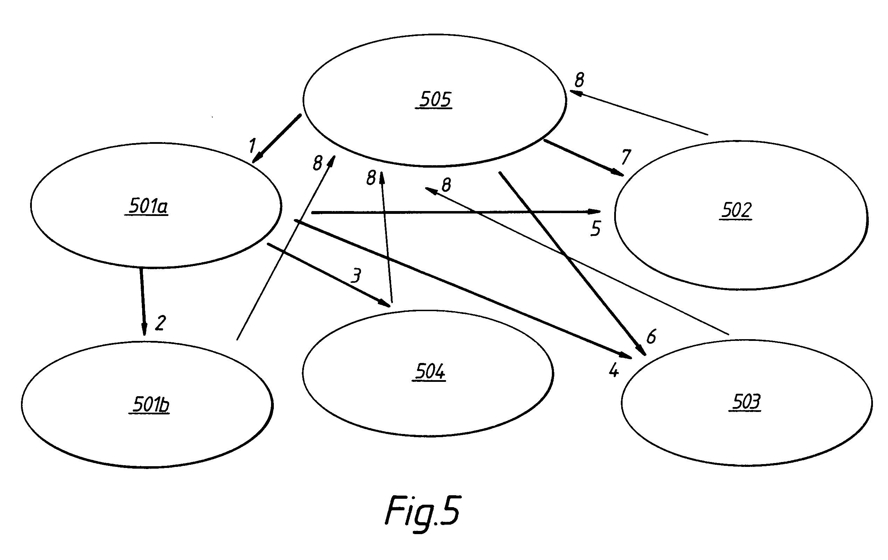

Figure 5 shows a representation of the five states of the RIC described above and some, but not all, of the possible transitions between the states, with the normal data reception state being subdivided into two different phases representing the first part of the state and the second part of the state. Also the transitions between the different states are represented by arrowed lines, each of which has a state transition number associated with it for identification purposes. Although figure 5 does not show all possible transition options, these are all covered by the text below.

The events that occur during each state are summarized below, with each event being described in the order in which they occur after the state has been entered. In each case the status of the RIC signals which are described are those of a RIC which is receiving data from a remote node for retransmission, or of a RIC which has just finished receiving data from a remote node and is returning to the idle state.
Idle or Ouiescent state 505 (No ethernet activity on any RIC)
The RICs are in idle state if there is no activity on the network. No signals are made active by the RICs and both ARBIT and ENVCOL are at level 1.
Normal data reception state -phase 1 501a (Data is received at only one RIC)
ACTND is made active, and so ARBIT is driven to level 2.
Normal data reception state- phase 2 501b (Data is repeated without a collision occurring)
ACKI is made inactive on this RIC whilst the ARBIT signal being at level 2 makes ACKI active on all other RICs. IRE is then made active and so ENVCOL is driven to level 2.
IRD and IRC are used to transmit data on the modified inter-RIC bus.
Transmit Collision state 504 (Collision experienced after packet has started to be transmitted)
ACTND and IRE are made active by the RIC and so ARBIT and ENVCOL are both driven to level 2. ACKI is made inactive on this RIC whilst being made active on all other RICs. One or more other RICs make their ANYXND active if a transmit collision occurs on one or more of their ports. This causes ARBIT to go to level 3 and all the RICs sense ANYXNS going active causing them all to transmit jam from all their ports and also extend the active level of the ANYXND signal for 96 bits. This will cause a transmit collision on the original receiving port and the RIC containing this port makes its ANYXND active but then senses that ACKI to it already inactive, makes active ACTND and makes inactive ANYXN. Eventually either the network is collision free and both ARBIT and ENVCOL will go to level 1, or there is only one port left with collision in which case ARBIT goes to level 2. The RIC containing this port will have its ACKI made inactive causing that RIC to make active ACTND, make inactive ANYXND and revert to receive state - phase 2 (501b).
Simultaneous Receive State 503 (Data is received on two RIC ports concurrently)
More than one RICs receiving data from their ports make their ACTND and IRE active causing both ARBIT and ENVCOL to be driven to level 3. All the RICs sense ANYXNS going active and thus make active and extend their ANYXND. All the RICs transmit jam, whilst the original receiving RICs make inactive ACTND but ACKI to these is kept inactive. This causes transmit collisions on the original receiving ports and the RICs containing these ports make their active ANYXND but as this is already active there is no change. The RICs containing the original receiving ports then make active their ACTND since ACKI is already inactive for each and make inactive ANYXND after the extension has ended. Eventually either the network is collision free and ARBIT and ENVCOL are both at level 1 or only one port is left with a transmit collision and ARBIT is at level 2 but in either case ANYXNS is made inactive. The RIC with the one-port-left attains port M status and remains in the receive state- phase 2 till the activity on that port subsides.
Receive Collision State 502 (a collision has been experienced on a port to which multiple ethernet nodes are attached)
A RIC only goes into this state if its AUI port is connected to a coax media based network as shown for remote devices 9, 10 and 11 in figure 1. The RIC receiving data on this port make active ACTND and so ARBIT is driven to level 1. ACKI to the same RIC is made inactive and it makes active IRE, and ENVCOL is thus driven to level 1. All other RICs start repeating data on to their outgoing ports. The receiving RIC senses a collision on the part of the data network it is connected to and makes active COLN causing ENVCOL to go to level 3. All the RICs sense COLN and transmit jam from their ports except for the port receiving the collision which continues to be in receive state phase 2. The jam condition is terminated either at the end of the time-out or at the end of the collision.

### Description of the three level driving system

In the invention it is further proposed that the modified RIC bus may be constructed of four separate electrical signal conductors which may optionally be terminated at one or both ends in order to prevent the reflection of electrical signals. The conductors may further be optionally designed such that they are constructed as tracks on a printed circuit board, the tracks having a well controlled characteristic impedance (Z ohms) to a ground plane or track. Furthermore the conductors may be constructed such that they can be operated in pairs, each pair of conductors having a characteristic impedance (Z ohms) to the ground plane or track, and a characteristic impedance of 2Z ohms between each other. The tracks can then be used as four separate electrical conductors with an impedance of Z ohms to the ground plane, or they may be used as two pairs of electrical conductors with a characteristic impedance of 2Z ohms between each of the two lines within any one pair. This latter arrangement allows said tracks to be used for the transmission of differential electrical signals or for the transmission of single-ended electrical signals where the return electrical current is carried in the ground plane.

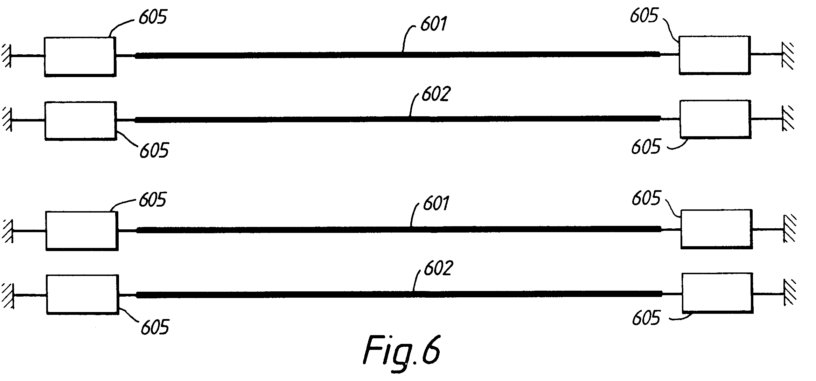

Figure 6 shows a schematic representation of 4 electrical tracks 601, 602 as may be fabricated on a printed circuit board, and which have the optional ability to operate as 4 single electrical conductors or 2 pairs of electrical conductors, and which will hereinafter be referred to as quadlines. Each track 601, 602 has a Z ohm terminating resistor at each end and each pair of tracks 601/602 have a characteristic impedance between them of 2Z ohm. Implementing the modified RIC bus as a quadline enables it to be used to carry traffic other than that required by the modified RIC bus. One example is that the quadlines could be instead used to carry FDDI or token ring type network data, optionally making use of the differential capability of the quadline to reduce electromagnetic emissions from the FDDI or Token ring traffic.

This capability to carry a variety of data signals is likely to be of particular use within a modular networking chassis where it may be necessary to transport several types of networking protocols along a single electrical bus.

It is further proposed that each of the four conductors used to form the modified RIC bus and the quadlines be connected to a DC voltage source capable of supplying required amount of current via a fixed resistor, and that each transmitter within the adaptation unit be constructed with two separate electrical circuits commonly known as current sources, said circuits being capable of conducting a fixed amount of electrical current when they are actuated or enabled.

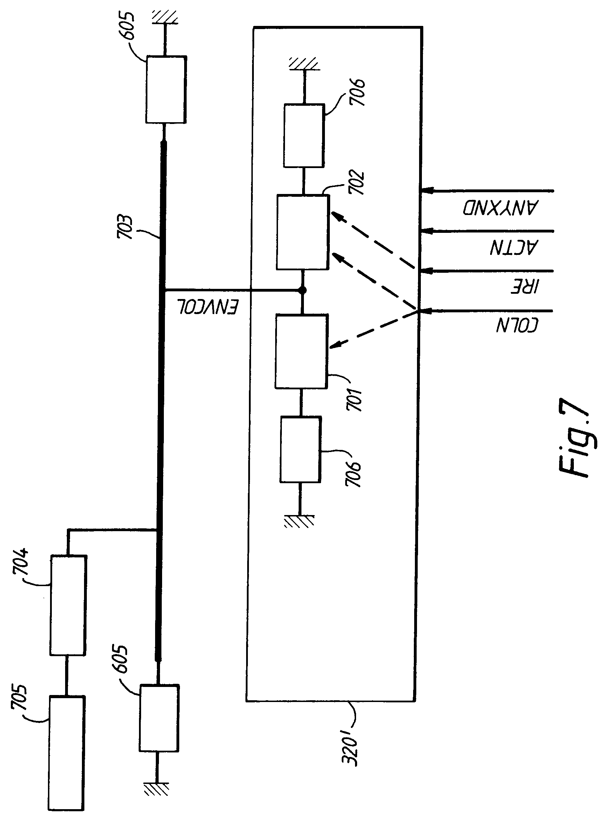

With this arrangement it is possible to produce the three level drive signal required for the modified RIC bus, as is shown by reference to figure 7 which shows in schematic form one part of the RIC adaptation unit 320', which contains two identical current sources 701, 702 (associated with fixed resistors 706) attached to a part of the modified RIC bus 703.

As is shown in figure 7 each conductor within the modified RIC bus or quadline is connected by an identical resistor 704 to a fixed DC voltage source 705. Referring further to this diagram it should be appreciated that the current sources shown can be enabled by a signal from the RIC. When none of the RIC signals are made active, the current sources are switched off and both the ARBIT and ENVCOL lines are at a voltage essentially that of the DC power supply voltage, which we shall refer to as level 1. If the RIC asserts an active signal on the IRE line, one of the current sources 702 will be switched on and will thus result in the voltage of the ENVCOL line being reduced to a lower voltage , which we shall refer to as level 2. Should the COLN line be made active then the voltage of the ENVCOL line will be further reduced to a voltage which we shall refer to as level 3.

Should further current sources be attached to the ENVCOL line and should they be actuated then the voltage of the ENVCOL line will fall even further, although for the purposes of this invention we shall still refer to the resulting voltage level as level 3.

It will be seen that a similar principle can be employed with reference to the ARBIT signal line, although other methods of producing a three level signalling scheme are not ruled out.

The method described for reducing the RIC bus to four lines is one specific example of how multilevel signalling, and especially three level signalling, can be used to improve the interconnection means between busable ethernet ICs, of which the RIC is one of many examples, and of which more will no doubt be developed. The invention, as described here with reference to the RIC, can also be applied with slight modification to other busable ethernet ICs, all of which have similar signal designations on their electrical bus. Other types of multilevel signalling could also be used, for example 4 or 5 level signalling, enabling the number of lines to be reduced even further.

## Claims

1. An adaptation circuit for operation in conjunction with a repeater element for a data network, said repeater element being capable of communicating with one or more other repeater elements via an 'inter-repeater bus' such that they together operate as a single logical repeater, said adaptation circuit arranged to receive a plurality of signals from said repeater element, each of said plurality of signals operating at two distinct voltage levels ('two-level signals'); to provide electrical connection to the inter-repeater bus; and to convert said two-level signals into a number, smaller than said plurality, of signals each operating at three or more distinct voltage levels ('multi-level signals').

2. A first adaptation circuit according to claim 1 arranged to receive one or more multi-level signals originating from a second adaptation circuit in accordance with claim 1, and to convert said multi-level signals into a plurality of two-level signals suitable for input to said repeater element.

3. An adaptation circuit according to claim 1 or 2, wherein two-level signals may be converted into multi-level signals and wherein said multi-level signals are generated by two or more electrical current sources having a first connection via a common resistor to a fixed power supply, and a second connection to a shared electrical connection such as a ground connection.

4. A data networking repeater operating as a single ethernet or IEEE 802.3 repeater and comprising a plurality of repeater elements connected together via adaptation circuits according to claim 1, 2 or 3, wherein data is input to a first repeater element, is then passed to a first adaptation circuit whence it passes to subsequent adaptation circuits, each of which is connected to a subsequent repeater element and whence the data is transmitted onward to the data network.

5. An electrical bus to provide interconnection means for signals between two or more adaptation circuits according to claim 1, 2 or 3, said electrical bus comprising pairs of electrical signal lines each of which may be operated as either one differential signal line, each signal line having a characteristic impedance of Z ohms to ground and a characteristic impedance of 2Z ohms between a pair of signals lines, or as twice the number of single ended signal lines each of which has a characteristic impedance of Z ohms to the ground plane.

6. An adaptation circuit according to claim 1, 2 or 3, and being suitable for operation in conjunction with the RIC integrated circuit (Manufacturer's Designation DP 83950) manufactured by National Semiconductor Corporation, wherein the number of lines needed to interconnect a multiplicity of said RIC devices is 4, enabling said multiplicity of said RIC devices to act together as a single ethernet repeater.

7. A method of forming a single repeater utilizing a number of repeater elements such as those typified by the RIC in which adaptation circuits each according to claim 1, 2, 3 or 6 are used and in which no arbitration circuit is used.

8. An adaptation circuit generally according to claim 1, 2 or 3, designed to operate specifically in conjunction with ethernet repeater integrated circuits similar in general principle to the RIC, and consisting of a repeater circuit which can be interconnected via an electrical bus to other similar or identical devices to form a single repeater device.

9. An adaptation circuit according to claim 1, 2, 3, 6 or 8 constructed as a separate unit from the repeater integrated circuit.

10. An adaptation circuit according to claim 1, 2, 3, 6,or 8 incorporated as part of the repeater integrated circuit.
